# EUROPEAN PATENT APPLICATION

(11) **EP 2 808 820 A1**
(43) Date of publication of application: **03.12.2014**
(21) Application number: 13170065.0
(22) Date of filing: 31.05.2013
(51) Int. Cl.: G06F 21/41, H04L 29/06

(54) **Method of changing password in an industrial automation and control system**

(71) Applicant: ABB Technology AG, 8050 Zürich (CH)
(72) Inventor: Alvarez, Fernando, 5417 Untersiggenthal (CH); Deverson, Richard, 5430 Wettingen (CH)
(74) Representative: ABB Patent Attorneys

(57) **Abstract**

The present invention relates to the field of central user account management in automation and control systems such as Substation Automation systems, in particular, to changing user password in accordance with password policies in order to ensure compliance with the latest cyber security industry standards including the new standard IEC 62351-8. The present invention provides a method of changing a user password in an Industrial Automation and Control System IACS comprising a user authentication unit running a LDAP server and at least one Intelligent Electronic Device IED running a LDAP client, wherein the IED comprises a Local Human Machine Interface LHMI, wherein the method comprises steps of: entering a new password at the LHMI after successful authentication of the user, verifying conformance of the new password with a local password policy by the IED, and changing the user password to the new password.

## Description

### FIELD OF THE INVENTION

This present invention relates to the field of central user account management in automation and control systems such as Substation Automation systems, in particular, to changing user password in accordance with password policies in order to ensure compliance with the latest cyber security industry standards including the new standard IEC 62351-8.

### BACKGROUD OF THE INVENTION

For years users in an IT environment are accustomed to login into a computer system to get access by entering an individual User ID and password. In the industrial world, users have been accustomed to have full access to all devices without having to authenticate/identify or log in. However, since the introduction of security regulations such as SOX, NERC-CIP, HIPAA and IEC 62351-8, utilities are being forced to implement comprehensive cyber security measures similar to those seen in the IT environment. These measures include (i) managing user access rights centrally, and (ii) managing password policies such as password complexity, password history and password lifetime.

The "Smart Grid" movement combined with the need for Utilities to comply with new security requirements has in turn triggered a need for creative methods to implement the new requirements. The cyber security standard IEC 62351-8 is particularly important for utilities. IEC 62351-8 is about the central management of user accounts and their functional roles, in order that Role Based Access Control (RBAC) can be applied throughout a system.

However the IEC 62351-8 standard does not cover or specify all implementation details. For example, new users shall change their assigned passwords immediately after the first log in. How this is implemented is not specified in the standard so it is up to each vendor to find the efficient way to implement this feature.

LDAP mechanisms support to some extent "change password" but not in a practical way, the IEC 62351-8 client would have to do a round-trip to the IEC 62351-8 server to check new passwords entered at the client against password policies. This usually gives a very bad user experience, since there will be a delay due to network communication, server request processing, etc., depending on its load at the time of the request.

### SUMMARY OF THE INVENTION

As explained above, the conventional central user account management system in the field does not enable RBAC directly via the LHMI of the device, nor any approach avoiding the round-trip when checking the password policy. Therefore, one of the objects of the present invention is to provide an efficient password change implementation with improved usability in an IEC 62351-8 environment where users are managed centrally.

According to the present invention, the IEC62351-8 PULL model can be used to provide RBAC directly via the LHMI of the device together with central management of users, thereby enhancing security and usability, e.g. user authentication at the LHMI of the device combined with central management of users.

The present invention provides a method of changing user password in an Industrial Automation and Control System IACS comprising a user authentication unit running a LDAP server and at least one Intelligent Electronic Device IED running a LDAP client. The LDAP server may be connected with the LDAP client via the existing network connection. The IED has a Local Human Machine Interface LHMI. According to the present invention, the method comprises the steps of: entering a new password at the LHMI after successful authentication of the user, verifying conformance of the new password with a local password policy by the IED, and changing the user password to the new password. The change password step may be carried out either directly on the LDAP server or on the LDAP client.

The password policies define constraints on passwords such as: minimum password length, character set allowed or special characters required, password lifetime, password history and account lockout.

The IEDs can be distributed in different geographical locations, i.e. they are connected in the manner of a Wide Area Network, WAN. The IEDs in the same geographical location are connected a Local Area Network, LAN. The LDAP server is located somewhere in the WAN in respect to the IEDs, whereas the LDAP clients are distributed in the LAN.

The local password policy can, but must not necessarily, be an LDAP entry or be stored in the storage or memory of the IED, e.g. it can be a plain text file stored an local network attached storage at the IED. The local password policy enables that the password policy check does not depend on the LDAP server, e.g. it can be pre-checked directly on the IED.

Preferably, the method further comprises the steps of: retrieving a global password policy from the LDAP server, and storing the global password policy as the local password policy into the IED.

Preferably, the authenticating step is carried out by the LDAP server. This may be defined as a default setting when the network connection to the LDAP server is established.

Preferably, the LDAP client comprises a replica of a LDAP database of the LDAP server. That is the LDAP client is able to authenticate the user access and update the password entries locally when the new password fulfils the local password policy. This is particularly useful when the network connection to the LDAP server is broken. In this case LDAP client can take over the function of the LDAP server. When the network connection is back online again, the new password can be synchronised from the LDAP client back to the LDAP server.

Preferably, wherein the local password policy is stored separately in respect to the LDAP client, e.g. in a plain text file. This makes the local password policy independent with the LDAP client, e.g. even when the LDAP client crashed, the password policy check may be still carried out using the plain text file comprising the local password policy. The plain text file may be periodically updated by retrieving the password policy from the LDAP server.

Alternatively or additionally, the LDAP replica on the IED may comprise the local password policy, e.g. in form of a LDAP entry. This allows that the local password policy can be automatically updated from the LDAP server after synchronisation of the replica.

The present invention discloses a system and methods in which password policies are fully enforced in IEC 62351-8 environments efficiently and intelligently.

This invention provides an implementation solution that:
(i) supports "change password" functionality at IEC 62351-8 enabled client devices, directly via the local HMI of the device and/or via a PC based engineering tool connected to the device or with the product web server.
(ii) supports the enforcement of users having to change their first assigned passwords at IEC 62351-8 enabled client devices.
(iii) facilitates Enforcement of password policies at IEC 62351-8 enabled client devices.
(iv) supports checking the password policy direct at the client to avoid delays.
(v) adds usability to the mandatory cyber security industry standards of supporting central management of users and password policies.

The present invention specifies methods that can be implemented in IEC 62351-8 enabled clients. IEC 62351-8 LDAP servers store user account data. IEC 62351-8 enabled clients are the devices which access IEC 62351-8 servers for the purpose of authenticating users based on user credentials, i.e. user name and user password.

As explained above, the IEC 62351-8 standard utilises the LDAP technology for user authentication. The present invention supports the IEC 62351-8 standard and LDAP technology without breaking IEC 62351-8 interoperability.

According to IEC 62351-8 standard, user accounts are managed and stored in a LDAP Server. The LDAP servers support configurable password policy, i.e. data are stored centrally in the IEC 62351-8 LDAP server. In a standard LDAP system, it is the LDAP server which verifies new passwords against the password policies before being accepted and stored. The IEC 62351-8 client will provide the user with change password functionality e.g. via a graphical user interface such as PC based client or via a LHMI, i.e. directly on the device.

According to the present invention, the password policies may be applied/checked at the client devices when users change their passwords, thereby aiding efficiency and usability. Since the invention is based on the standard LDAP protocol, no extensions or modifications are needed.

The password policy is extracted from the LDAP server and stored on the IEC 62351-8 client before the change password operation. Thus, the client will apply exactly the same password policy as applied on the IEC 62351-8 server, in order to verify new passwords on the client before the change password operation is requested on the IEC 62351-8 LDAP Server. In this case the password validation process is carried out directly on the client side.

Alternatively, the password policy data may be retrieved from the IEC 62351-8 server during the change password operation on the IEC 62351-8 client. This means that the IEC 62351-8 client will always have the latest password policy data. In this case, the IEC 62351-8 client does not have to store any password policy data beyond the scope of the current change password operation. This reduces the requirements on devices with limited resources in terms of memory capacity.

Usually the user authentication is carried out by the LDAP server directly or through a LDAP proxy at the client side. Preferably, the LDAP client may have a replica comprising all or partial LDAP entries enabling the user authentication at the LDAP client. This is particularly advantageous when the connection to the LDAP server is broken. The LDAP client is also responsible for password change, i.e. the new password will be updated in the replica and synced back to the LDAP server if the connection is back online. The LDAP server will then update the new password to all other LDAP client at the IED either at the next defined time schedule or immediately once the connection is back.

The present invention provides an improved efficiency, i.e. the IEC 62351-8 server performs the password validation but will not receive a "bad" password from an IEC 62351-8 client, i.e. the server is not loaded unnecessarily with bad request that would have to reject, and therefore the password change operation can proceed more efficiently on the server.

According to the present invention, users may change passwords either directly at the device, at the PC or direct at an application, e.g. the user can change his password via the local user interface such as a local HMI, configuration tool or via the web server of the product.

Further, the present invention enables a minimum disruption to the user's workflow by being able to change his or her password where he or she is. In other words, the user does not have to stop what they were doing, leave the device LHMI and go to a PC in order to change their password.

Further, the present invention also enables an early password policy check and improves usability. The early password check using the local password policy stored on the IED will reduce the user interface delays that could be introduced if the local device has to perform round-trips to the server to check password policy compliance. Delays could be introduced by multi-hops communication or server load. The improved usability using the present invention is because the new password is immediately valid throughout the system, i.e. the user can immediately login in another device with the new password. There is no need to remember both the old password and the new password. Nor will the user be confronted with a "password expired" message on the next IED.

Further, the user will receive immediate feedback from the IEC 62351-8 client about the "quality" of the password. The user does not have to wait until the change password operation is "committed" to the IEC 62351-8 server in order to be informed that the new password does not comply with the password policies.

Further, the password policy is enforced in a usable and practical manner, i.e. a combination of security with usability and maintainability for applying password policies, e.g. password expiry and password complexity. The password policies are centrally maintained on the IEC 62351-8 server. This ensures better security through consistency of password policies, i.e. one common source, and easier maintenance, i.e. policies are maintained centrally and the policies are applied throughout the system. In other word, the local password policy are kept up to date with the global password policy, e.g. any changes made centrally will be distributed or synchronised to the IEC client.

### BIREF DISCRIPTION OF THE FIGURES

Hereinafter, the present invention will be explained in more detailed and preferred embodiments on basis of the accompanied figures.
Fig. 1 shows an exemplary embodiment of changing password according to the present invention, which is compliant with the IEC 62351-8 standard; and
Fig. 2 shows an exemplary embodiment of changing password at the first login according to the present invention, which is compliant with the IEC 62351-8 standard.

### EXAMPLARY EMBODIMENTS OF THE INVENTION

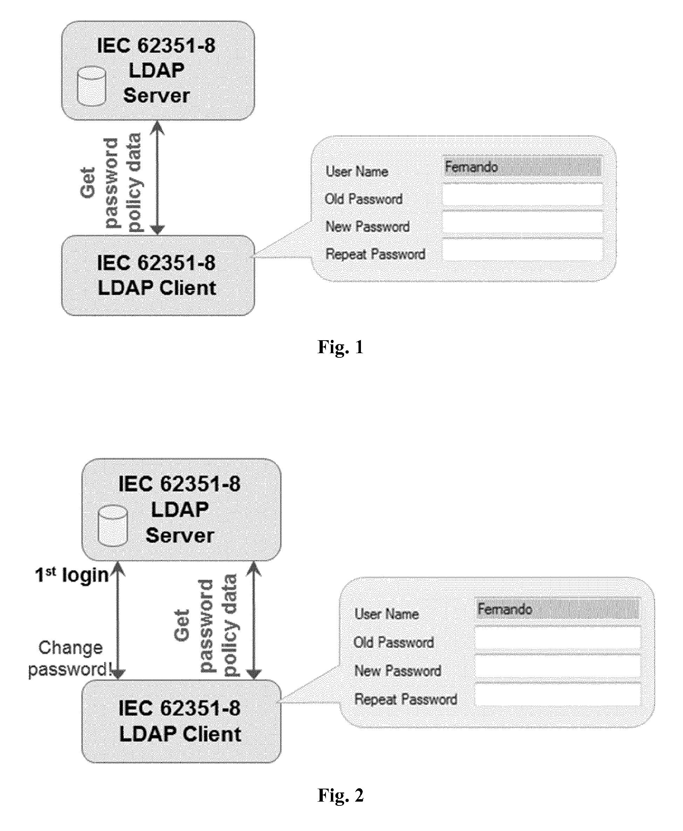

Fig. 1 illustrates the change password sequence according to an exemplary embodiment of the present invention. The process may be summarised by followings steps:
(1) User triggers a "change password" request at the IEC 62351-8 client.
(2) The IEC 62351-8 LDAP client retrieves password policy data via LDAP from the IEC 62351-8 LDAP server.
(3) The IEC 62351-8 client presents the user with an interface either via GUI or at LHMI in which the user may change his or her owns password.
(4) The IEC 62351-8 client checks that the new password entered by the user complies with the password policies retrieved from the IEC 62351-8 server in step (2). This checking is performed locally on the client, thus avoiding an extra round trip to the LDAP server to check if new passwords pass password policy criteria. This improves the user experience.

Fig. 2 illustrates the change password sequence at first login according to an exemplary embodiment of the present invention. It is standard security practice that new users change their assigned passwords at their first log in into the system. The process may be summarised by followings steps:
(1) User logs in via an IEC 62351-8 LDAP client.
(2) The IEC 62351-8 LDAP server observes that the user's password has expired, usually initial passwords are set to expired.
(3) The IEC 62351-8 server sends login successful via LDAP. The IEC 62351-8 server also provides password information via LDAP to the IEC 62351-8 client. The password information indicates to the IEC 62351-8 client that the user needs to change their password.
(4) The IEC 62351-8 client requests password policy data from the IEC 62351-8 server via LDAP.
(5) The IEC 62351-8 client presents the user with an interface either via GUI or a LHMI in which the user may change their own password.
(6) The IEC 62351-8 client checks that the new password entered by the user complies with the password policies retrieved from the IEC 62351-8 server in step (3). This checking is performed locally on the client, thus avoiding an extra round trip to the LDAP server to check if new passwords comply with password policy criteria. This improves the user experience.

While the invention has been described in detail in the drawings and foregoing description, such description is to be considered illustrative or exemplary and not restrictive. Variations to the disclosed embodiments can be understood and effected by those skilled in the art and practising the claimed invention, from a study of the drawings, the disclosure, and the appended claims. In the claims, the word "comprising" does not exclude other elements or steps, and the indefinite article "a" or "an" does not exclude a plurality. The mere fact that certain elements or steps are recited in distinct claims does not indicate that a combination of these elements or steps cannot be used to advantage, specifically, in addition to the actual claim dependency, any further meaningful claim combination shall be considered disclosed.

## Claims

1. Method of changing a user password in an Industrial Automation and Control System IACS comprising a user authentication unit running a LDAP server and at least one Intelligent Electronic Device IED running a LDAP client, wherein the IED comprises a Local Human Machine Interface LHMI, wherein the method comprises steps of:
entering a new password at the LHMI after successful authentication of the user,
verifying conformance of the new password with a local password policy by the IED, and
changing the user password to the new password.

2. Method according to claim 1 further comprising the steps of: generating the local password policy by retrieving a global password policy from the LDAP server.

3. Method according to claim 2 further comprising the step of: storing the local password policy into the IED.

4. Method according to one of the preceding claims, wherein the authenticating step is carried out by the LDAP server.

5. Method according to one of claims 1 to 3, wherein the LDAP client comprises a replica of a LDAP database of the LDAP server.

6. Method according to claim 5, wherein the authenticating step is carried out by the LDAP client.

7. Method according to one of claims 5 to 6, wherein after changing the user password, the new password is synchronised from the LDAP client back to the LDAP server.

8. Method according to any one of claims 3 to 7, wherein the local password policy is stored separately in respect to the LDAP client.

9. Method according to any one of claims 5 to 7, wherein the replica comprises the local password policy.

10. Method according to any one of claims 2 to 9, further comprises the step of: upon a change of the global password policy, distributing the changed global password policy to the local password policy.

11. An Industrial Automation and Control System IACS comprising:
a user authentication unit including a LDAP server,
at least one Intelligent Electronic Device IED including a LDAP client, wherein the IED comprises a Local Human Machine Interface LHMI,
a local password policy generated based on a global password policy of the LDAP server,
wherein the IED is adapted to verify conformance of a new password with the local password policy after the successful authentication, and
wherein the system is adapted to change the user password to the new password if the new password fulfils the local password policy.

12. System according to claim 11, wherein the IED is adapted to generate the local password policy by retrieving a global password policy from the LDAP server.

13. System according to any one of claims 11 to 12, wherein the local password policy is stored into the IED.

14. System according to any one of claims 11 to 13, wherein the LDAP client comprises a replica of a LDAP database of the LDAP server.

15. System according to claim 13, wherein the local password policy is stored separately in respect to the LDAP client.
